Europäisches Patentamt

European Patent Office

Office européen des brevets

(11) Publication number : **0 458 474 A1**

# (12) EUROPEAN PATENT APPLICATION

(21) Application number : **91303881.6**

(51) Int. Cl.$^5$ : **G01N 21/64**

(22) Date of filing : **29.04.91**

(30) Priority : **30.04.90 US 516462**

(43) Date of publication of application :
**27.11.91 Bulletin 91/48**

(84) Designated Contracting States :
**AT BE CH DE DK ES FR GB GR IT LI LU NL SE**

(71) Applicant : **ATOCHEM NORTH AMERICA, INC.**
**Three Parkway**
**Philadelphia, Pennsylvania 19102 (US)**

(72) Inventor : **Burchill, Michael T.**
**484 Dutch Neck Road**
**East Windsor, New Jersey 08520 (US)**

(74) Representative : **Jennings, Nigel Robin et al**
**KILBURN & STRODE 30 John Street**
**London WC1N 2DD (GB)**

(54) Detecting the presence of a modifier in a substrate surface.

(57) Apparatus for detecting the presence of a modifier ingredient, such as an UV stabiliser, in a substrate surface, for instance of PVC, includes a UV generator (12) which produces UV radiation which is directed to a desired area (22) of the substrate surface (16). An image of the desired area of the surface is formed by a lens (23) at an image plane on a detector (26) which is arranged to detect the fluorescent radiation produced by the substrate surface. The detector (26) generates a signal in response to the fluorescent radiation incident thereon which is representative of the degree to which the substrate surface has been modified.

EP 0 458 474 A1

*FIG. 2*

The present invention relates to surface detector systems and is concerned with surface detector systems for determining the extent to which a surface under observation has been modified with a modifier ingredient.

During the manufacture of an article, it is often desirable to modify at least some of the surface of the article with a modifier ingredient. The modifier imparts to the modified surface a specific property.

Regardless of how this modification occurs, it is necessary to determine if the desired modification has actually occurred. Unless the achievement of the modification can be acurately and quickly determined, it is typically difficult to perform such a surface modification commercially since one would not know if the surface has the desired modified properties.

For example, U.S. Patent No.4,770,905 to Silbermann et al. discloses a process for the modification of the surface region of polymer articles, such as solid polyvinyl chloride (PVC). In one embodiment of the process described in this patent, an ultraviolet (UV) radiation stabiliser is coated on the surface region of a PVC article by transporting the article through an aqueous media and contacting a surface of the article with a solution of the stabiliser in an organic solvent while the article is being transported through the aqueous media. The UV stabiliser coated on the surface of the article thus protects the coated surface against attack by the effects of sunlight by preventing degradation due to UV radiation.

It is critical, however, to detect whether this coating has thoroughly covered the surface to be exposed to sunlight. The absence of this coating in any area of the PVC surfaces to be exposed could lead to uneven weathering patterns in the surface. This is particularly undesirable where the PVC surface is applied to a cladding on commercial or residential structures.

There are numerous chemical methods to analyse the presence or absence of the coating on a PVC surface. Unfortunately, there are several disadvantages attendant to their use.

One widely used method is in the dissolution of a PVC surface sample in a suitable solvent such as tetrahydrofuran (THF), followed by centrifugation and high performance liquid chromatography (HPLC) analysis. This method is time consuming and results in the destruction of the sample. Further, this method is not continuous so while it would be useful for quality control in a batch process, it would not provide process control for a continuous fabrication line.

Accordingly, it is the object of the present invention to provide a method and apparatus for detecting the presence of a modifier ingredient in a substrate surface which is not only able to detect the fact that portions of the surface are unmodified but is rapid and has a sufficient resolution to be able to detect flaws and alert an operator to the presence of process defects occurring during the continuous operation of a manufacturing line. It is a further object of the invention to provide such a method and apparatus which is non-destructive of the substrate surface.

According to the present invention a method of detecting the presence of a modifier ingredient in a substrate surface is characterised by:

(a) directing ultraviolet radiation to a desired area of the substrate surface which emits fluorescent radiation in an inverse relation to the extent to which it is modified with the modifier ingredient;

(b) directing radiation emanating from the desired area to a detection means; and

(c) generating a signal in response to radiation incident on the detection means, the level of the signal being indicative of the extent to which the substrate surface has been modified with the modifier ingredient.

The step of directing the radiation from the desired area of the substrate surface to the detection means may include forming an image including the desired area of the substrate surface on the detection means or directing the radiation to a charge coupled device. The method may also include forming the image of the desired area on a cathode ray tube.

The method is particularly useful when the substrate comprises polyvinyl chloride and the modifier ingredient comprises an ultraviolet radiation stabiliser but a wide range of different substrates and modifiers are also possible.

In accordance with a further aspect of the present invention apparatus for detecting the presence of a modifier ingredient in a substrate surface is characterised by:

(a) means for generating ultraviolet radiation and directing the ultraviolet radiation to a desired area of the substrate surface;

(b) means for directing fluorescent radiation emanating from the desired section of the substrate surface; and

(c) detecting means disposed to receive and detect the directed fluorescent radiation and to generate a signal in response to the received fluorescent radiation.

The method and apparatus of the present invention enable deviations in the modification of the substrate surface to be quickly and accurately detected without the need to destroy the article. The present invention is particularly suited for use as a quality control check to detect flaws in the surface modification during continuous processing of the article.

The invention particularly solves the problem of detecting the presence of a modifier ingredient that absorbs UV radiation, such as a UV stabiliser, on a substrate surface, such as PVC. As used herein, "on a substrate surface" means that the modifier ingredient can be physically present either on the surface or within the surface region of the substrate surface, which is the region just below the surface of the substrate. For example, the substrate surface can be coated with the modifier ingredient.

The signal generated by the detection means is preferably compared with a threshold value which is representative of a desired area of the substrate surface that is not modified with the modifier ingredient, that is to say the threshold value is the value of the signal which is obtained when no modifier ingredient is present, and a different signal is then generated representative of the difference between the signal and the threshold value which is representative of the degree to which the desired area of the substrate surface is unmodified.

The present invention also embraces a method of modifying a substrate surface in which at least one modifier ingredient is incorporated in the substrate surface and the amount of the modifier ingredient in the substrate surface is then detected by the method in accordance with the invention. The modifier ingredient may be incorporated in the substrate surface by immersing it in a liquid and then contacting it with a solution of a modifier ingredient in a solvent.

Further features and advantages of the invention will be apparent from the following description of certain specific embodiments which is given by way of example with reference to the accompanying drawings, in which:-

Figure 1 is a graphical representation of the relationship between the percentage of stabiliser in a PVC substrate and the fluorescent radiation emanating from the substrate in response to UV radiation incident thereon;

Figure 2 is a block-schematic diagram of one embodiment of an apparatus in accordance with the present invention;

Figure 3 is a block-schematic diagram of a second embodiment of an apparatus in accordance with the present invention;

Figure 4 is a schematic diagram of a fibre optic head and cable used in a modified apparatus in accordance with the present invention.

The substrate material can be any polymer or plastic substrate. Exemplary substrates include PVC, polycarbonate, polyethylene, polypropylene, acrylonitrile/butadine/styrene (ABS), rubber, polyacrylates, polymethacrylates, and polyesters (e.g. polyethylene terephthalate and polybutylene terephthalate). The resin substrate can be transparent, translucent, opaque or pigmented.

The substrate surface can be an entire article or only part of an article. The article can be of any shape. Exemplary articles include residential and commercial cladding and window frames.

The modifier ingredient can be any ingredient with which one skilled in the art would desire to modify the properties of the substrate surface. Exemplary modifier ingredients include UV radiation stabilisers, anti-oxidants, anti-static agents, pigments, and dyes.

Preferred UV radiation stabilisers are benzophenones and triazoles.

The modifier ingredient can be incorporated into the substrate surface by any technique known in the art. Particularly preferred methods of incorporating the modifier ingredient, such as a UV radiation stabiliser, into the substrate, such as PVC, are disclosed in U.S. Patent Nos.4,770,905, 4,792,465 and 4,868,011.

For example, the surface can be modified by immersing the surface in a substrate liquid media and then contacting the immersed surface with a solution of the modifier ingredient in a solvent. The liquid is one which is non-aggressive toward the surface and which is immiscible with the solvent. That is, the liquid, such as water, should not dissolve, swell or otherwise react with the surface.

The solution should be immiscible with the liquid. For example, if the liquid is water, then the solution can be water-immiscible organic solvents, such as halogenated hydrocarbons having up to six carbon atoms in the chain, ketones, and aliphatic esters. Examples of such solutions include methylene chloride, chloroform, 1,2-dichloroethane, 2-chloro-2-methyl-propane, 2-pentanone, 3-pentanone, 2-hexanone, 2,4-pentanedione, diethyl ehter, dipropyl ether, dimethoxy ethane and furan.

The modifier ingredient is preferably incorporated into the surface region of the substrate region. In some embodiments, such as where the substrate surface is to be used as residential or commercial cladding, the modifier ingredient, particularly a UV radiation stabiliser, is incorporated in a surface region of about 200 microns in depth from the surface of the sheet. Preferably, the modifier ingredient is substantially absent from the interior or bulk of the sheet.

There is a specific relationship between the emitted light from a substrate and the degree of modifier ingredient, such as an UV stabiliser, is present in a substrate. When UV radiation of a specific wavelength, for example about 329 nm, is incident on a substrate, such as PVC, the substrate absorbs this radiation and emits light of a higher wavelength, but of a lower energy. This phenomenon is called fluoresccence.

When the modfier ingredient incorporated on the substrate is a UV radiation stabiliser, the modifier ingredient absorbs light and prevents the PVC molecules from absorbing and re-emitting light. In other words, the UV radiation stabiliser prevents the PVC substrate from fluorescing. The PVC substrate is thus protected against degradation by UV radiation incident on its surface.

For a given substrate, such as PVC, there are a number of factors which affect its fluorescence properties. These factors include: the modifier ingredients present in the substrate, the various pigments and dyes used to colour the substrate, the types of UV radiation stabilisers used, and the degree of thermal degradation imparted to the substrate by processing conditions.

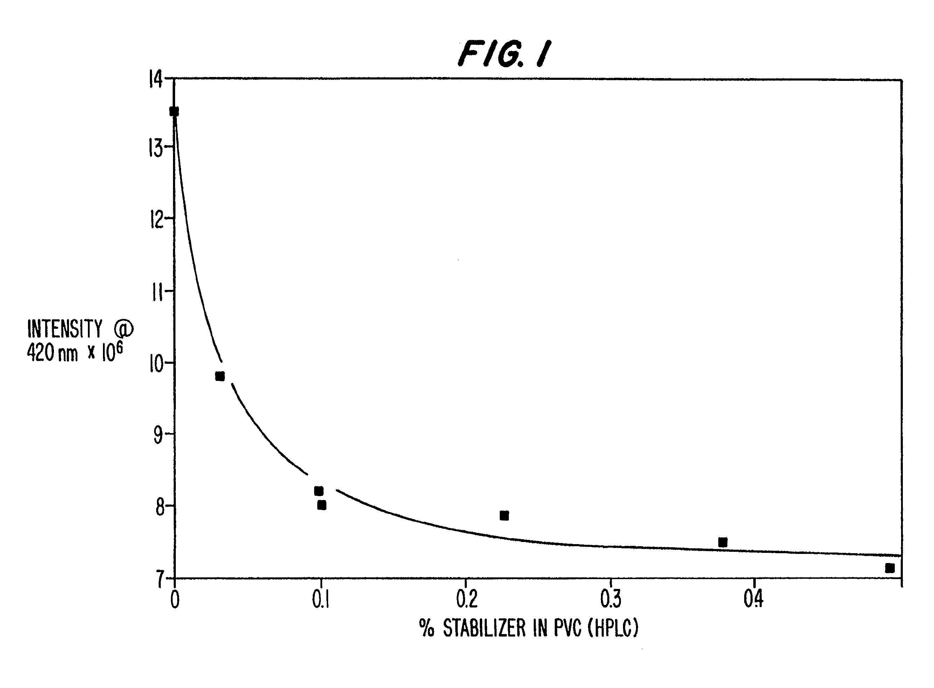

An example of the relationship between the amount of the modifier ingredient and the fluorescence of the substrate is shown in Figure 1. Figure 1 is a representation of data obtained for a white coloured PVC substrate. The Y axis represents photon counts which are indicative of light intensity from the substrate, and the X axis represents the percentage of UV radiation stabiliser in the PVC as measured by secondary methods. Such secondary methods may include, for example, HPLC.

As shown in Figure 1, the largest intensity of light occurs for a 0% stabiliser PVC substrate. The fluorescence decreases sharply as the amount of UV stabiliser present on the PVC substrate increases. From a level of 0.1% stabiliser and higher, the degree of fluorescence does not change greatly as more UV radiation stabiliser is applied.

The relationship shown in Figure 1 is only one example of such a relationship. It is for one type of substrate, namely PVC, and for one colour of PVC subsrate having one type of UV radiation stabiliser. For other types of substrates and UV radiation stabilisers, the absolute values of fluorescent intensity would probably change. The trend of increasing fluorescent intensity with decreasing percent UV radiation stabiliser on the PVC substrate holds, however, for all permutations of substrates, colours and stabilisers.

Similarly, when a modifier ingredient other than a UV radiation stabiliser is present, there is a similar relationship between the fluorescent intensity and the amount of the modifier ingredient on the substrate surface. By detecting the change in fluorescence for a substrate, the presence of the modifier ingredient in the substrate can be detected.

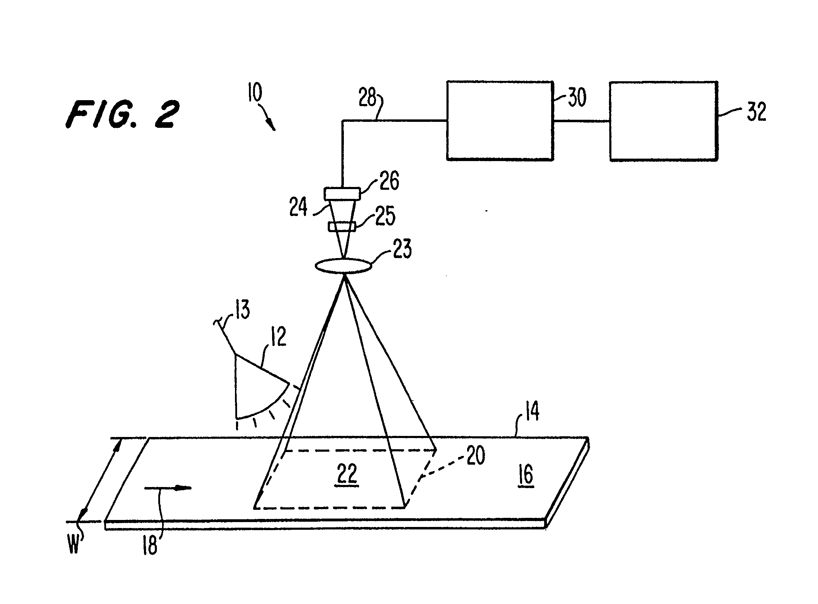

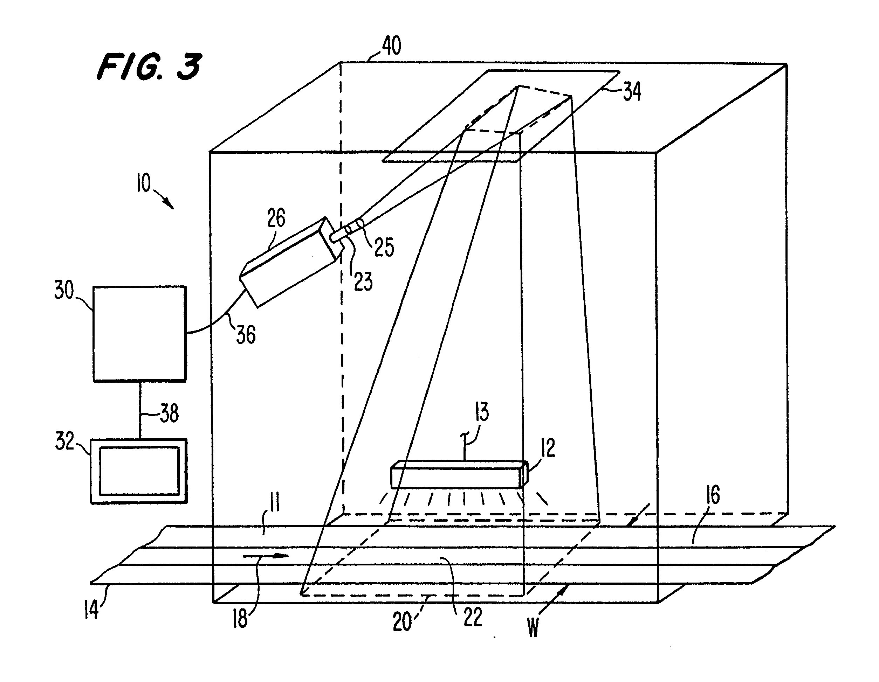

Two embodiments of apparatus for detecting the presence of a modifier ingredient in a substrate surface are shown in Figures 2 and 3 and designated generally by the numeral 10. Those reference numerals which are common to Figures 2 and 3 are used to designate structural elements in each Figure that are substantially the same. Accordingly, the description of these elements in relation to Figure 2 or 3 applies equally to the element in either Figure.

The apparatus of the present invention includes means for generating ultraviolet radiation and directing the ultraviolet radiation to a desired section of the substrate surface. In one embodiment, as shown in Figure 2, UV radiation generating means 12 are provided to emit UV radiation. UV radiation generating means 12 are connected through a power line 13 to a power source, not shown. The means for generating ultraviolet radiation preferably emits radiation in the range of about 310-365 nm and, most preferably, about 312 nm. Preferably, when the means for generating ultraviolet radiation emit radiation in the range of about 310-365 nm, the substrate 14 emits fluorescent radiation in the range of about 420 nm.

Also as shown in Figure 2, a substrate 14 is provided having a top surface 16. Substrate 14 is, preferably, moved in a direction shown by arrow 18 by moving means, not shown. The UV radiation emitted by UV radiation generating means 12 is directed to a desired area 20. Included within the bounds of desired area 20 is preferably, as shown in Figures 2 and 3, a desired section 22 of the substrate surface.

As shown in Figure 3, desired area 20 may be larger than desired section 22 of substrate 14. This will not affect the operation of an apparatus in accordance with the present invention. What is important is that desired area 20 is at least as wide as width 'W', of substrate 14. In this way, as substrate 14 is moved in direction 18, the entirety of top surface 16 may be viewed in the manner described below to determine whether it has been properly modified with a modifier ingredient, such as a UV stabiliser.

The apparatus of the present invention includes means for directing radiation emanating from the desired section of the substrate surface. The radiation is directed to a detector means, as discussed below. Preferably, the means for directing radiation forms an image of the desired area, including the desired section of the substrate surface, at an image plane. Figure 2 shows a lens 23 spaced from desired area 20 so as to form an image on a sensitive surface 24 of a detector 26.

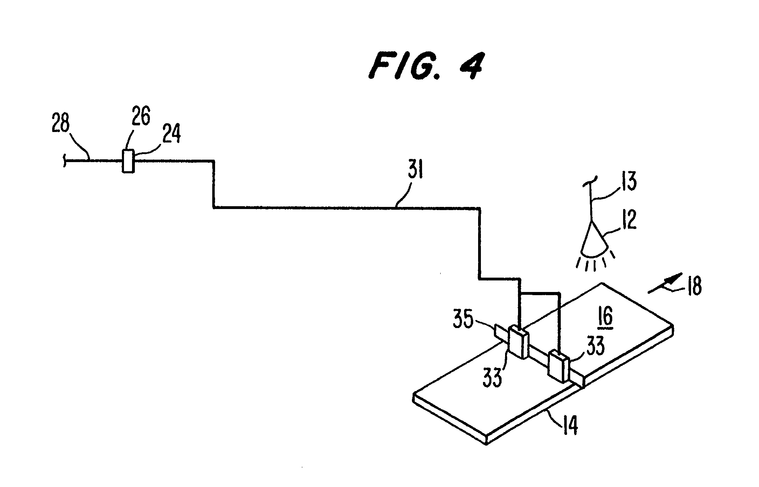

In lieu of lens 23, apparatus 10 shown in Figure 2 may include a fibre optic cable 31, as shown in Figure 4, to direct light emanating from top surface 16 of substrate 14 to detector 26. At one end of fibre optic cable 31 is one or more fibre optic scanners 33 disposed opposite top surface 16. At the other end of fibre optic cable 31 is detector 26. In this way, radiation emanating from top surface 16 enters scanner 33, traverses fibre optic cable 31, and is thereby directed to sensor 26.

Fibre optic scanner 33 may be fixed relative to top surface 16. Alternatively, optic scanner 33 may be movable transversely along rail 35 relative to top surface 16 as substrate 14 moves in direction 18. By making optic scanner 33 movable along rail 35, the size of fibre optic scanner 33 can be minimised while still obtaining complete coverage of top surface of substrate 14.

The apparatus of the present invention includes a detecting means disposed to receive the directed radiation and detect fluorescent radiation. The detecting means generates a signal in response to the received fluorescent radiation. The level of the signal is indicative of the extent to which the substrate surface has been modified with the modifier ingredient.

In one embodiment of the invention, the detector means is a detector 26, which is chosen such that when an image of desired area 20 is formed thereon, and the image contains at least some fluorescent radiation generated by the substrate surface in response to ultraviolet radiation incident thereon, the detecting means generates a signal in response to fluorescent radiation incident thereon. Detector 26 generates a signal in response to the fluorescent radiation incident on sensitive surface 24 which is sent via a line 28 to computing means 30 and processed in the manner described below.

In one embodiment, as shown in Figure 1, and described previously, the intensity of fluorescent radiation emanating from the substrate material is indicative of the concentration of UV stabiliser on the substrate. Thus, the level of the signal generated by detector 26 is indicative of both the intensity of fluorescent radiation emanating from substrate 14 and, inferentially, based on the relationship shown in Figure 1, the concentration of UV stabiliser on the substrate 14. In this way, the level of the signal from detector 26 can be used to determine both whether substrate 14 has been modified with a UV radiation stabiliser and the degree to which it has been modified. Similar relationships and determinations can be made for modifier ingredients other than a UV radiation stabiliser.

In one embodiment of an apparatus in accordance with the present invention, the detecting means includes a charge coupled device. Other examples of detectors 26 useful in an apparatus in accordance with the present invention are a cadmium sulphide photocell or silicon photovoltaic cell.

In one embodiment, the light source generates UV radiation having a maximum wavelength of about 365 nm and an intensity of about 7000 uW/cm² at about 38 cm distance from substrate 14 made of PVC. A plano-convex lens (f = 25 mm) could be used as image forming means 23. A computer supplied by the Dolan-Jenner Company and including a Micro-Optic II series 8230 control board or a computer provided by Opticoast can be connected to the detecting means. The Micro-Optic II series 8230 control board is used to modify the response characteristics of the detector and to provide test leads for measurement of the analog output of the detector elements. The Dolan-Jenner package also includes a relay by which an alarm can be turned on when a given signal level output from detector 26 is realised.

Preferably, in an apparatus in accordance with the present invention, a cathode ray tube is provided for displaying a representation of the image formed on the charge coupled device. As shown in Figure 2, a display means 32 is provided operably connected to computer means 30 for displaying the signal output from detector 26. For example, display means may include a cathode ray tube to display a representation of the image formed of desired area 20 on sensitive surface 24 of detector means 26. In addition, or in lieu of computer means 30 and a cathode ray tube, output from detector means 26 can be displayed in an analog form by, for example, displaying the level of the signal from detector means 26 on a strip chart recorder or a voltmeter.

Referring now to Figure 3, an image of desired area 20 is formed, through filter means 25 on TV camera 26. A suitable filter is one which removes the infrared components from the ultraviolet lamp source, since all ultraviolet lamps produce substantial infrared radiation. Suitable filters can be of three types: (1) A bandpass filter, which is a filter having a transmission that is high for a particular band of wavelengths, transmitting only radiation having wavelengths above and below this band and blocking all others; (2) An interface filter which is a filter made of thin layers of metals and dielectrics which, by the optical effects of interference, results in high transmission over a narrow spectral range; and (3) A hot mirror which is a mirror with a coating that reflects infrared radiation and transmits visible light.

The fluorescent radiation emanating from top surface 16 of substrate 14 is preferably directed to camera 26 by a reflective surface 34. Because the entirety of apparatus 10 can be included in an enclosure 40, by providing reflective surface 34, the height and, hence, the total volume of the apparatus 10 can be reduced.

The output of the camera is connected through a line 36 to computer means 30. Output or display means 32, in the form of a TV monitor, or CRT, is connected to computer means 30 through line 38. Output means 32 produces a visual representation of the fluorescent radiation emanating from top surface 16 of substrate 14. In this way, an operator can view top surface 16 of substrate 14 as it moves in the direction of arrow 18 to determine if it has been properly modified with a modifier ingredient, such as a UV radiation stabiliser. If there is a missed or insufficiently modified area, the substrate 14 being viewed can be rejected.

The method in accordance with the present invention includes directing ultraviolet radiation from, for example, UV radiation means 12, to a desired area 22 of top surface 16 of substrate 14. In response to the UV radiation incident on its top surface 16, substrate 14 emits fluorescent radiation in an inverse relation to the extent to which it is modified with a modifier ingredient.

An image of the radiation emanating from the desired area 22 of top surface 16 of substrate 14 is then directed to the detector and a signal is generated in response to fluorescent radiation incident on the detector. The level of the signal is indicative of the extent to which the substrate surface has been modified with the modifier ingredient.

The method preferably also includes comparing the signal generated by detector 26 to a threshold value, the threshold value being representative of a desired area of the substrate surface that is not modified with the modifier ingredient. This comparison can be performed, for example, in computing means 30 and includes comparing the value of the signal generated by detecting means 26 with a stored value stored in computing means 30. The stored value is the value that is generated by the detector 26 if the substrate 14 was not at all modified with the modifier ingredient.

The method also preferably includes generating a difference signal representative of the difference between the signal and the threshold value. When the comparison is performed in the computing means 30, a result of the comparison is generated which is the difference between the signal generated by detector 26 and the threshold value stored in computing means 30. The difference signal is representative of the degree to which the desired area of the substrate surface is modified. That is, the greater the difference signal, the higher is the degree the substrate 14 is modified with the modifier ingredient.

## Claims

1. A method of detecting the presence of a modifier ingredient in a substrate surface, characterised by:

   (a) directing ultraviolet radiation to a desired area (20) of the substrate surface (16) which emits fluorescent radiation in an inverse relation to the extent to which it is modified with the modifier ingredient;

   (b) directing radiation emanating from the desired area (20) to a detection means (26); and

   (c) generating a signal in response to radiation incident on the detection means (26), the level of the signal being indicative of the extent to which the substrate surface has been modified with the modifier ingredient.

2. A method as claimed in claim 1, characterised in that the step of directing radiation emanating from the desired area (20) of the substrate surface (16) to the detection means (26) includes forming an image including the desired area of the substrate surface on the detection means.

3. A method as claimed in claim 1, characterised in that the substrate comprises polyvinyl chloride.

4. A method as claimed in claim 1, characterised by:

   (d) comparing the signal to a threshold value which is representative of a desired area of the substrate surface (16) that is not modified with the modifier ingredient;

   (e) generating a difference signal representative of the difference between the signal and the threshold value, the difference signal being representative of the degree to which the desired area of the substrate surface is unmodified.

5. A method as claimed in any one of the preceding claims, characterised in that the ultraviolet radiation has a wavelength in the range of about 310-365 nm, preferably about 312 nm.

6. A method as claimed in any one of the preceding claims, characterised in that the modifer ingredient comprises an ultraviolet radiation stabiliser.

7. Apparatus for detecting the presence of a modifier ingredient in the substrate surface, characterised by:

   (a) means (12) for generating ultraviolet radiation and directing the ultraviolet radiation to a desired area (20) of the substrate surface (16);

   (b) means (23;33) for directing fluorescent radiation emanating from the desired section of the substrate surface; and

   (c) detecting means (26) disposed to receive and detect the directed fluorescent radiation and to generate a signal in response to the received fluorescent radiation.

8. Apparatus as claimed in claim 7, characterised in that the directing means (23) forms an image including the desired area of the substrate surface at an image plane.

9. Apparatus as claimed in claim 7 or claim 8, characterised in that the directing means includes a charge coupled device.

10. Apparatus as claimed in any one of claims 7 to 9, characterised in that the means (12) for generating ultraviolet radiation emits radiation having a wavelength in the range of 310-365 nm, preferably about 312 nm.

# FIG. I

INTENSITY @
420 nm x $10^6$

% STABILIZER IN PVC (HPLC)

EP 0 458 474 A1

FIG. 2

FIG. 3

# FIG. 4

**European Patent Office**

## EUROPEAN SEARCH REPORT

Application Number

EP 91 30 3881

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | INDUSTRIAL LABORATORY. vol. 51, no. 12, December 1985, NEW YORK US pages 1133 - 1137; I.L. AKSEL'ROD ET AL: "Luminescence method and device for the control of uniformity of dielectric coatings on silicon wafer" * page 1134; figure 2 * | 7, 8, 10 | G01N21/64 |
| Y | * idem * | 9 | |
| A | * idem * | 1, 2, 5 | |
| X | US-A-4841156 (J.T. MAY ET AL) | 7, 10 | |
| A | * column 3, line 9 - column 5, line 54; figures 1, 2 * | 1 | |
| Y | ANALYTICAL CHEMISTRY. vol. 61, no. 3, February 1989, COLUMBUS US pages 282 - 285; P.M. EPPERSON ET AL: "Molecular fluorescence measurements with a charge-coupled device detector" * pages 282 - 283; figure 1 * | 9 | |
| A | GB-A-2025980 (SANDOZ) * page 1, line 4 - page 3, line 60 * | 1, 3-6 | TECHNICAL FIELDS SEARCHED (Int. Cl.5 ) G01N |
| A | WO-A-8400066 (M. LUUKKALA) * abstract; figure 2 * | 1, 4, 7 | |

The present search report has been drawn up for all claims

| Place of search | Date of completion of the search | Examiner |
|---|---|---|
| BERLIN | 16 SEPTEMBER 1991 | JOHNSON, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document